# EUROPEAN PATENT APPLICATION

(11) **EP 3 875 549 A1**
(43) Date of publication of application: **08.09.2021**
(21) Application number: 21160907.8
(22) Date of filing: 05.03.2021
(51) Int. Cl.: C09D 5/18, C09D 7/43, C09D 7/45, C09D 7/61, C09D 175/04, C08K 3/36, C08K 5/098, C08K 3/32

(54) **FIRE PROTECTION AND RETARDANT COATINGS**

(30) Priority: 05.03.2020 GB 202003165; 27.10.2020 GB 202017015
(71) Applicant: Intumescent Systems Limited, Barfrestone Dover Kent CT15 7JG (GB)
(72) Inventor: Ward, Derek, Dover, Kent CT15 7JG (GB)
(74) Representative: Fry, David John

(57) **Abstract**

A fire protection/retardant coating whose composition includes specified quantities of water, water soluble polycarboxylate, biocide, antifoam, nano colloidal silica, polysaccharide, hydroxy ethyl cellulose, ammonium polyphosphate, and polyurethane polyester resin.

## Description

### Field of the Invention

This invention relates to fire protection/ retardant coatings and more especially to such coatings for timber surfaces.

### Background to the invention

Intumescent containing fire protection coatings are known but many fail to meet the criteria imposed by various Governmental bodies that the coating remains in place to prevent the passage of fire and smoke for a minimum period of 30 minutes. Typical of such requirements are those set by the European SPI test. Coatings in accordance with this invention have been found to exceed this minimum time period.

### Summary of the Invention

The invention provides an intumescent water-based coating whose composition comprises between 28.10 and 35.92% by weight water, between 0.01% and 0.15 by weight water soluble polycarboxylate, between 0.12 and 0.20% by weight biocide, between 0.16 and 0.22% by weight antifoam, between 2.67 and 3.27% by weight nano colloidal silica, between 7.80 and 12.00% by weight polysaccharide, between 0.63 and 0.77% by weight hydroxy ethyl cellulose, between 20.54 and 27.12% by weight ammonium polyphosphate, and between 27.81 and 33.99% by weight polyurethane polyester resin.

A preferred intumescent water-based coating composition comprises between 29.00 and 33.00% by weight water, between 0.07% and 0.10% by weight water soluble polycarboxylate, between 0.13 and 0.18% by weight biocide, between 0.17 and 0.20% by weight antifoam, between 2.82 and 3.10% by weight nano colloidal silica, between 9.00 and 11.00 by weight polysaccharide, between 0.66 and 0.74% by weight hydroxy ethyl cellulose, between 22.00% and 26.00% by weight ammonium polyphosphate, and between 29.00 and 32.00% by weight polyurethane resin.
Preferably, the water content of the coating composition is 31.10% by weight.
Preferably the water soluble polycarboxylate content of the coating is 0.09% by weight.
Preferably the biocide content of the coating composition is 0.14% by weight.
Preferably the antifoam content of the composition is 0.18% by weight.
Preferably the nano colloidal silica content of the composition is 2.98% by weight.
Preferably the polysaccharide content of the composition is 10.00% by weight.
Preferably the hydroxy ethyl cellulose content of the composition is 0.68% by weight.
Preferably the ammonium polyphosphate content of the composition is 25.00% by weight.
Preferably the polyurethane resin content is 29.80% by weight.

### Detailed description of the invention

The invention sets out to produce a fire proofed protective coating particularly for products or structures produced from timber and like surfaces. A method of producing a preferred coating in accordance with the invention will now be described.

The preferred chemical composition of the coating to be produced is as follows: by weight, 31.10% water; 0.09% of water soluble polycarboxylate to keep the coating mix in suspension; 0.14% of biocide to preserve the coating; 0.18% of antifoam to control foaming of the coating; 2.98% of nano colloidal silica as a nucleating agent; 10.00% of polysaccharide as a char enhancer; 0.68% of hydroxy ethyl cellulose as a thickener; 25.00% of ammonium polyphosphate as an acid donor; and 29.80% of polyurethane resin to bind the coating.

Production of the preferred composition comprised the sequential steps of mixing together in a suitable vessel 33.2% by weight of the total water to be added, and the above-mentioned quantities of water soluble polycarboxylate, biocide, antifoam, nano colloidal silica and polysaccharide.

Once thoroughly mixed, a pre-mixed solution of 4.00% by weight of the total water content to be added together with the specified quantity of hydroxyethyl cellulose was added to the vessel while stirring. The vessel contents were then mixed thoroughly together with an additional 13.00% by weight of total water content in the vessel for a period approximating to 20 minutes.

The remaining 49.8% of water and the specified quantity of ammonium polyphosphate were then added to the vessel and the contents mixed for a period approximating to 10 minutes.

The vessel was then scraped down and the vessel contents mixed for a further period approximating to 10 minutes.

The specified quantity of polyurethane resin was then added to the mix and the vessel contents mixed while stirring for approximately 1 minute followed by a final mixing of approximately 10 minutes until composition uniformity has been achieved.
The coating was then filtered as required.

As mentioned, the coating is particularly appropriate for providing a fireproofed long-lasting coating for internal and external timber products, these including all types of timber including softwoods and hardwoods to achieve the required SBI/B rating. In the presence of fire, the smoke emissions produced by the coating are significantly reduced.

The presence in the composition of the described coating achieves optimum char formulation because of the unique combination of polysaccharide resin as a char enhancer and nano colloidal material as a nucleating agent.

It will be appreciated that the foregoing is merely explanatory of coatings in accordance with the invention and that modifications can readily be made without departing from the scope of the invention as set out in the appended claims.

## Claims

1. An intumescent water-based coating whose composition comprises between 28.10 and 35.92% by weight water, between 0.01% and 0.15% by weight water soluble polycarboxylate, between 0.12 and 0.20% by weight biocide, between 0.16 and 0.22% by weight antifoam, between 2.67 and 3.27% by weight nano colloidal silica, between 7.80 and 12.00% by weight polysaccharide, between 6.38 and 7.80% by weight polyester resin, between 0.63 and 0.77% by weight hydroxy ethyl cellulose, between 20.54 and 27.12% by weight ammonium polyphosphate, and between 27.81 and 33.99% by weight polyurethane polyester resin.

2. A coating as claimed in claim 1 whose composition comprises between 29.00 and 33.00% by weight water, between 0.07 and 0.10% by weight water soluble polycarboxylate, between 0.13 and 0.18% by weight biocide, between 0.17 and 0.20% by weight antifoam, between 2.82 and 3.10% by weight nano colloidal silica, between 9.00 and 11.0% by weight polysaccharide, between 0.66 and 0.74% by weight hydroxy ethyl cellulose, between 22.00 and 26.00% by weight ammonium polyphosphate, and between 29.00 and 32.00% by weight polyurethane resin.

3. A coating as claimed in claim 1 or claim 2 wherein the water content of the coating composition is 31.10% by weight.

4. A coating as claimed in any preceding claim wherein the biocide content of the coating composition is 0.14% by weight.

5. A coating as claimed in any preceding claim wherein the antifoam content of the composition is 0.i8% by weight.

6. A coating as claimed in any preceding claim wherein the nano colloidal silica content of the composition is 2.98% by weight.

7. A coating as claimed in any preceding claim wherein the polysaccharide content of the composition is 10.00% by weight.

8. A coating as claimed in any preceding claim wherein the hydroxy ethyl cellulose content of the composition is 0.68% by weight.

9. A coating as claimed in any preceding claim wherein the ammonium polyphosphate content of the composition is 25.00% by weight.

10. A coating as claimed in any preceding claim wherein the polyurethane resin content is 29.00% by weight.

11. A coating as claimed in any preceding claim wherein the water soluble polycarboxylate content is 0.09% by weight.
